# EUROPEAN PATENT SPECIFICATION

(11) **EP 1 935 679 B1**
(45) Date of publication and mention of the grant of the patent: **07.04.2010**
(21) Application number: 06126948.6
(22) Date of filing: 21.12.2006
(51) Int. Cl.: B60G 17/02

(54) **Method and arrangement for controlling a suspension of a vehicle wheel**
Verfahren und Anordnung zur Regulierung der Aufhängung eines Fahrzeugrades
Procédé et agencement pour contrôler la suspension d'une roue de véhicule

(43) Date of publication of application: 25.06.2008
(73) Proprietor: Ford Global Technologies, LLC, Dearborn, MI 48126 (US)
(72) Inventor: Zetterström, Sigvard, 471 71 Hakenäset (SE); Jonasson, Mats, 433 49 Partille (SE)
(74) Representative: Mossmark, Anders Lennart

(56) References cited:
- EP-A- 1 354 731
- WO-A-00/38939

## Description

### TECHNICAL FIELD

The present invention relates to a method for controlling a suspension of a vehicle wheel by means of a suspension arrangement comprising at least two linkages connecting the wheel to the vehicle chassis and a torsion spring unit being part of one of said linkages, wherein said unit comprises an adjustable torsion spring and a rotation damper interconnected by an attachment section, the damper and the spring are connected to the chassis and the attachment section is connected to the linkage.

The invention also relates to an arrangement for suspension of a vehicle wheel, the arrangement comprising at least two linkages connecting the wheel to the vehicle chassis, a torsion spring unit being part of one of said linkages, said unit comprising an adjustable torsion spring and a rotation damper interconnected by an attachment section, wherein the damper and the spring are connected to the chassis and the attachment section is connected to the linkage.

### BACKGROUND

It is previously known in vehicles to use different types of suspensions systems for the vehicle wheels and wheel axles. Such systems are arranged between the wheels and the vehicle axles to allow resilient suspension of the wheel to provide good comfort, good road holding quality and long service life of the vehicle.

Different types of wheel suspension systems are previously known in connection with different kinds of wheel axles. The common denominator for these is that they comprise a spring-like device and a shock absorber. In traditional passive systems, the spring imparts an oscillation force to the sprung mass in relation to any movement of the wheel. The amplitude of the movement depends upon the frequency and the magnitude of the wheel motion. The effect of the shock absorber is to absorb and dissipate the energy imparted to the system from the wheel movement.

There are several drawbacks with such passive suspensions systems. One is that the installation is usually bulky. Moreover, they are not always suitable for active control of the suspension properties. In order to solve that problem, the document WO 00/38939 proposes a link arm connected between the wheel and the vehicle body and provided with a torsion spring unit for controlling a level adjustment of the wheel and for limited types of active control of the vehicle. A drawback with such a solution is that the torsion spring unit can only be adjusted for various types of static and dynamic loading involving relative slow and/or predictable behaviour of the vehicle. It does not allow for immediate adjustment of the torsion spring unit and is even less suitable for simultaneous anti-roll control and oscillation dampening. Further, it can not be adapted to control the unsprung mass of the vehicle wheel.

An example of an improved vehicle wheel suspension arrangement is disclosed in EP 1 354 731 A1. The arrangement comprises two linkages connecting a wheel to a chassis that is part of a vehicle body, and where a torsion spring unit is part of one of the linkage arms. The unit comprises an adjustable torsion spring interconnected with a rotation damper and connected to the chassis and a linkage arm. An electric motor is arranged for instantaneous adjustment of the torsion spring preload via a gearing unit. The damper is a vane rotation damper. By controlling the viscosity of the fluids, the dampening properties can be varied. The adjustable torsion spring preload provides an improved active suspension control for instantaneous adjustments to dampen oscillations. During operation, the torsion spring will work up to body resonance (2 Hz), which corresponds to static levelling, body heave or pitch and roll. The viscous damper will take care of frequencies up to wheel hop resonance, which is 15 Hz.

The main problem with the above mentioned torsion spring unit is that it cannot operate in an active four force-displacement quadrant suspension mode. Such a mode includes a first step of active pulling of the wheel upwards when ground forces it up in a jounce direction and second step of active pushing of the wheel downwards when the ground forces it down at rebound direction. This is a so called "true" active damper function. These steps cannot be handled by the above disclosed rotation damper.

The other two steps of the four force-displacement quadrant suspension modes are, thirdly, dampening the wheel movement when the ground forces it down at a rebound direction and, fourthly, dampening the wheel movement when the ground forces it upwards in a jounce direction. In the above torsion spring unit, the energy generated in those steps is dissipated by the viscous damper and the unit cannot regenerate the energy in the torsion spring motor due to the high ratio in the gear set up.

### DISCLOSURE OF INVENTION

The object of the present invention is to provide an improved vehicular wheel suspension arrangement, which can be utilised as an integrated controlled spring and damper device for each individual wheel and which can operate at various frequencies in all four steps of a four force-displacement quadrant suspension mode.

The present invention relates to a method for controlling a suspension arrangement of a vehicle wheel and an arrangement for carrying out said method. The suspension arrangement comprises at least two linkages connecting the wheel to the vehicle chassis, a torsion spring unit being part of one of said linkages, wherein said unit comprising a torsion spring and a rotation damper interconnected by an attachment section, the damper and the spring are connected to the chassis and the attachment section is connected to the linkage.

As inventive feature, the rotation damper further comprises an electrical motor for dampening oscillations in the suspension arrangement.

According to an illustrative embodiment there is provided a suspension arrangement for controlling the suspension, which is arranged at each of the vehicle wheels. A pair of linkages supports the wheel hub, wherein the torsion spring unit is connected to the upper linkages. The unit's torsion is related to the upper arm movements and thereby the unit can create an active force on the linkage and the wheel hub. Correspondingly, the wheel movements are transferred to the unit. The torsion spring unit is compact and modularized and includes both a controllable rotation spring and a controllable rotation damper. The spring and damper are both fixed to the vehicle chassis and interconnected to each other via an attachment section, and the section is interconnected to the linkage. In that way, the movement of the spring and damper correlates with the movements of the linkage. In order to provide the inventive controlling of the rotation dampening, an electrical motor is now introduced in the rotation damper.

Further according to the illustrative embodiment, the electrical motor is connected to an electrical energy storage device, such as a battery or a capacitor. Thereby it is possible for both instantaneous recharging of the storage device and controllable activation of the motor. The torsion spring is provided with an electrical motor which is connected to an electrical energy storage device, such as a battery or a capacitor. Thereby it is also possible with instantaneous controllable adjustment of the spring preload.

The main advantage of introducing a motor into the rotation damper is that it provides an active four quadrant active damping function as disclosed in claims 4 - 7. The torsion spring unit can thereby absorb excessive energy from damping the vertical movements of the chassis and the wheel, which energy is charged into a battery or super capacitor connected to the motor for later use by the suspension system or any electrical device in the vehicle. This was not possible with the torsion spring motor according to the previously known system described above.

Another advantage is that the motor can further create an active force control to increase or decrease the wheels' contact with the road at wheel frequency (up to 15-20 Hz) due to irregularities in the road. The motor can force the wheel downwards to regain ground contact when there is a cavity and force the wheel upwards to reduce excessive ground force when there is strong impact in the jounce direction. The torsion spring of the previously known system described above could only control movement at a lower frequency (up to 2-3 Hz). Such movements are static levelling, body heave and pitch which requires much higher forces.

A further advantage of the combination of a torsion spring and a damper motor is that they constitute a condensed and modularized suspension unit which both at lower and higher frequencies has the four quadrant active dampening function. Furthermore, when the spring comprises an electrical motor for preload of the active spring control, the unit controls the vertical movements of the chassis and the wheel at road slopes or cavities in the ground.

Moreover, according to an illustrative embodiment, the attachment section comprises a gearing unit interconnecting the electrical motor, via the rotor, with the attachment section. The gearing unit can be a planetary gear. The gearing unit is interconnected to the attachment section via a friction device to provide moment overload protection. The advantage is that the gear ratio can be adapted to improve energy recharging and dampening. The friction device provides safe operational protection at risk of force over-load.

Moreover according to an illustrative embodiment, the damper motor can be connected in parallel with a vane rotary damper. The advantage is that the damper can take care of higher damping forces since it will further reduce the magnitude of the positive forces. Moreover, due to the active control of the damper motor there is no need to tune the vane damper and no valves are needed. In cases when only a vane rotary damper is used for damping, this has to be tuned for operation or may be controlled by using magneto- or electrorheological fluid.

### BRIEF DESCRIPTION OF THE DRAWINGS

In the following text, the invention will be described in relation to illustrative embodiments with reference to the attached drawings. These embodiments are used for illustration only and do not in any way limit the scope of the invention. In the drawings:
Figure 1 shows a front view of a suspension arrangement including a torsion spring unit according to the invention.
Figure 2 shows a front view of the torsion spring unit.
Figure 3 shows a cross sectional view in the axial direction (X-X) through the torsion spring unit of figure 2.
Figure 4 shows a cross sectional view through a gearing unit (A-A) of the rotation damper according to figure 2.
Figure 5 shows a cross sectional view in an axial direction (X-X) through an alternative rotation damper according to figure 2.
Figure 6 shows a cross sectional view perpendicular to the axis direction (C-C) through the alternative rotation damper according to figure 5.
Figure 7 shows the first quadrant of the four quadrant vehicle suspensions arrangement control.
Figure 8 shows the second quadrant of the four quadrant vehicle suspensions arrangement control.
Figure 9 shows the third quadrant of the four quadrant vehicle suspensions arrangement control.
Figure 10 shows the fourth quadrant of the four quadrant vehicle suspensions arrangement control.

### DESCRIPTION OF ILLUSTRATIVE EMBODIMENTS

The following text describes a single suspension arrangement. It should however be realized by a person skilled in the art that one such arrangement can be positioned on more than one wheel. Furthermore, it should be realized that the system can be used in different kind of vehicles; such as cars, trucks or buses.

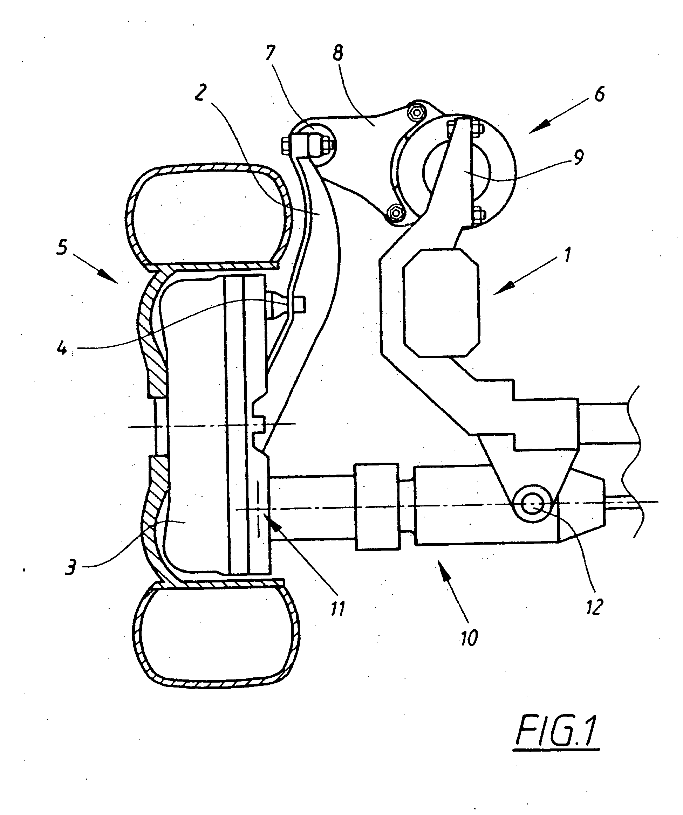

Figure 1 shows a front view of a suspension arrangement including a torsion spring unit according to the invention. The arrangement is positioned at a vehicle chassis 1. The arrangement comprises an upper linkage arm 2 connected to a wheel hub 3 via a first bolt 4 positioned along the vertical axis of the hub and a second bolt (hidden in the view) at the outermost end of the linkage and positioned close to the wheel axis. The upper linkage arm can be an integrated part of the wheel hub. A wheel 5 is connected to the hub in a conventional way. The suspension arrangement also includes a pair of lower linkage arms 10 (one covering the other in the view) connected via pivoting joints 11 to the wheel hub 3. These arms are positioned on opposite sides of the vertical axis. The innermost ends of the arms are connected to the vehicle chassis via pivoting joints 12.

The innermost end of the upper linkage arm 2 is connected to the outermost end of a lever arm 8 via a pivoting joint 7. This joint is positioned above the first connecting bolt 4 of the upper linkage arm 2. This lever arm is fixed to and extends in a radial direction from the centre of a torsion spring unit 6. In case the suspension arrangement is placed at a steering wheel, some of the pivoting joints can be replaced by ball joints. The torsion spring unit is positioned in line with the vertical axis of the hub 3 and is fixed at both ends to a support 9 on the vehicle chassis.

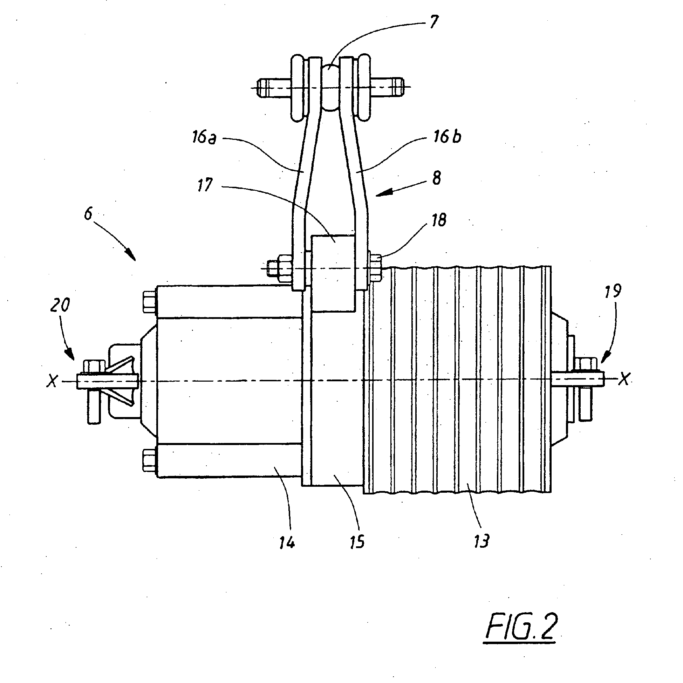

Figure 2 shows a front view of the torsion spring unit 6. The unit comprises a torsion spring 13 and a rotation damper 14. These are both connected to an attachment section 15. The lever arm 8 further has a pair of branches 16a and 16b attached to a projection 17 at the attachment section via bolts 18. These arms extend in a radial direction from the torsion spring unit 9. A rubber bushing (not visible) at the bolts 18 ensure that vibrations from the wheel are not transferred to the torsion spring unit or the vehicle chassis 1. The outermost end of the lever arm 8 is connected to the upper linkage arm 2 via a pivoting joint 7 as described above. The torsion spring 13 is fixed to the vehicle chassis support 9 via two protrusions 19. The rotation damper 14 is fixed to said support via two protrusions 20.

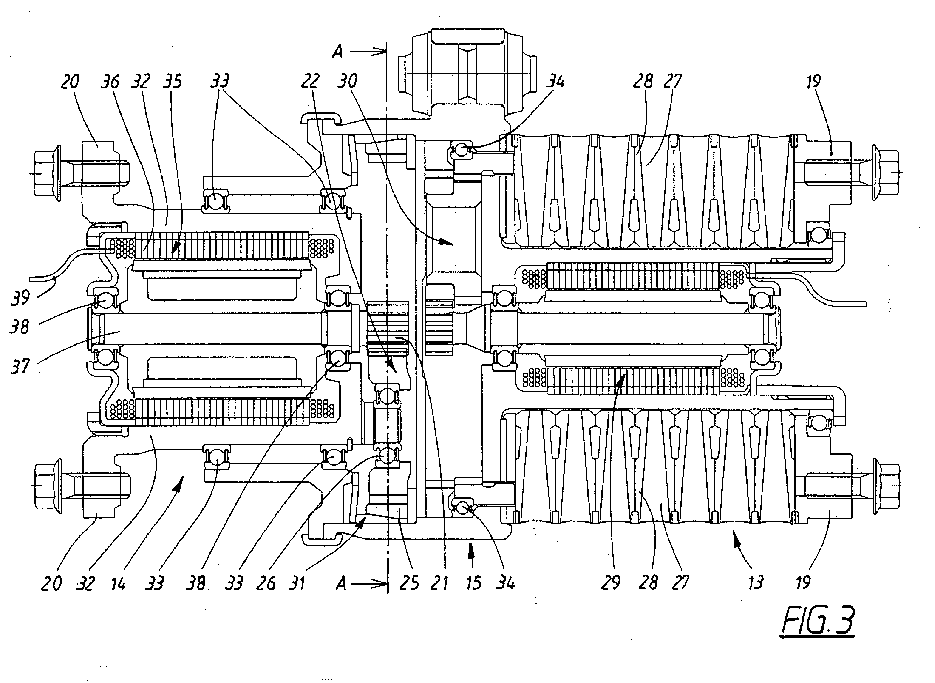

Figure 3 shows a cross sectional view in the axial direction (X-X) through the torsion spring unit 6 of figure 2. The torsion spring 13 is described in document EP 1354731 A1 and will not be described in detail in this document. In short, it can be said that the attachment section 15 is journalled in bearings 34 relative to a planetary gear 30 as part of the torsion spring. The torsion spring 13 comprises resilient elements 27 placed between opposed discs 28, which elements together forms the torsion spring 13. The cooperating elements are connected at one end to the attachment section via the planetary gear and at the other end to the vehicle chassis support 9 via the protrusions 19.

Further, the rotor of an electrical motor 29 is connected to the elements via the planetary gear while its stator is fixed in relation to the vehicle chassis support. Due to the planetary gear, the low rotational speed and a corresponding increase in torque is transferred from the motor to the resilient elements. The motor can pre-tension the elements and thereby the torsion spring force is increased, which corresponds to an adjustable spring preload. During operation, the torsion spring will work up to body resonance (2 Hz), which corresponds to static levelling, body heave or pitch and roll. The active spring will be able to control the spring force acting on the vehicle body in dependency of the body movements.

In another embodiment the torsion spring 13 does not comprise an electrical motor and a gear for preloading the spring. In such an embodiment the torsion spring operates in dependency only on the spring rate and not by adjusting the spring preload. Such a torsion spring could for instance comprise resilient elements as mentioned below, or it might be designed by other means. In a further embodiment the torsion spring 13 comprises an electro-rheological fluid, where electricity is used to influence the fluid viscosity and consequently the torsion spring properties. Such a torsion spring is described for instance in US 6386553.

On the opposite side of the attachment section 15 is the rotation damper 14. The damper 14 constitutes an innovative feature of the torsion spring unit 6. Its functionality will be described below. The damper 14 comprises a body part 32 fixed to the vehicle chassis 1 via said protrusions 20. The attachment section 15 is journalled in bearings 33 relative to the damper body part 32. The damper 14 further comprises an electrical motor 35 having a stator 36 and a rotor 37. The stator 36 is fixed in relation to the vehicle chassis support 9 while the rotor is journalled in bearings 38 in relation to the stator and damper body part. The rotor 37 is connected to a central wheel 21, forming part of a planetary gear described below.

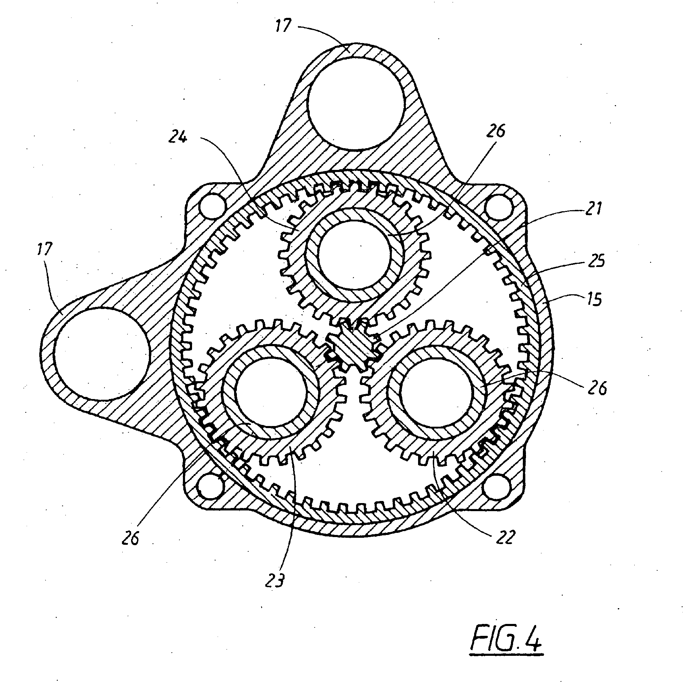

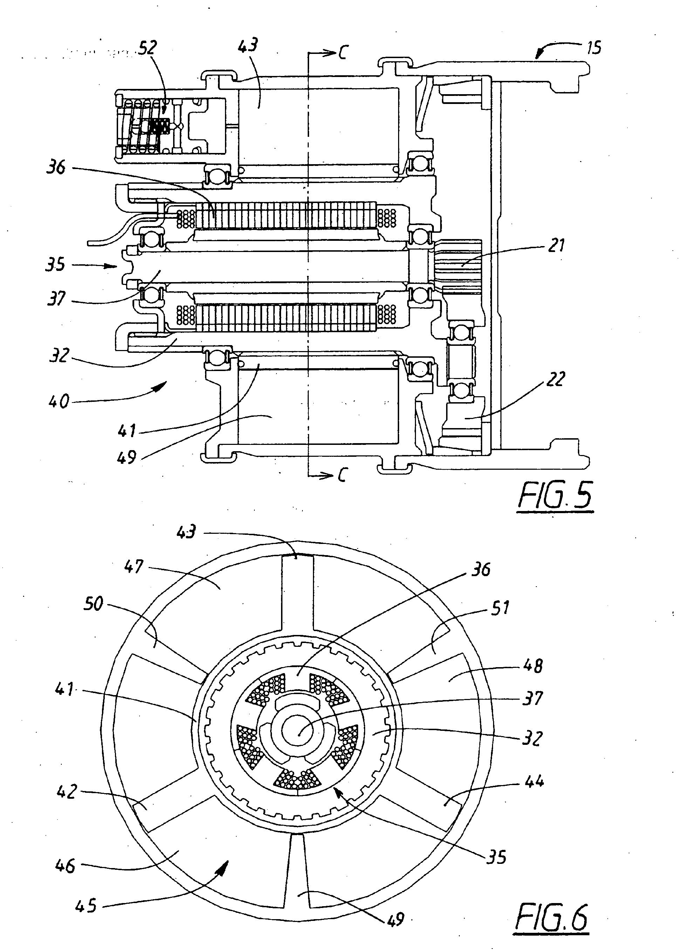

Figure 4 shows a cross sectional view through a gearing unit (A-A) of the rotation damper according to figure 3. The gearing unit consists of a planetary gear. The central wheel 21 meshes with three surrounding gears 22, 23, 24 which in turn mesh with an outer gear ring 25. The surrounding gears are journalled in bearings 26 relative to the attachment section 15, as shown in figure 5. The outer gear ring cooperates with the attachment section 15 via a friction device 31. When the attachment section rotates, the central wheel also rotates. Due to the gear ratio the low rotational speed and a corresponding increase in torque is transmitted from the central wheel 21 to the outer gear wheel 25.

The electrical motor is connected to an electrical energy storage device, such as a battery or a capacitor (not shown in the view) through wire 39. A DC motor is suitable for the arrangement. However, other types of electrical motors may be used and fall within the scope of the invention. Using an electrical motor means that it is possible for both instantaneous recharging of the storage device and controllable activation of the motor. A control unit (not shown) is part of said motor and energy storage device system. Said control unit will provide the functionalities of the rotation damper as described below. Sensors and wire connections to the vehicle central control system may be used to collect parameters for correct operation. Said control systems may be integrated and also controlling to torsion spring 13 operations.

Figure 5 shows a cross sectional view in an axial direction (X-X) through an alternative rotation damper according to figure 2. In this alternative, the damper motor 35 is connected in parallel with a vane rotary damper. The damper can take care of higher damping forces since it will further reduce the magnitude of the positive forces. Moreover, due to the active control of the damper motor there is no need to tune the vane rotary damper and therefore electromagnetic devices (for viscosity control) are not needed.

Figure 6 shows a cross sectional view perpendicular to the axis direction (C-C) through the alternative rotation damper 40 according to figure 5. It can be seen that the vane damper comprises a cylindrical vane 41 with three wings 42, 43, 44, which is rotatable within a cavity 45. The cavity is divided into three chambers 46, 47, 48 by protrusions 49, 50, 51 as part of the vane damper enclosure. The chambers are filled with fluid with a certain viscosity. The cylindrical vane is hollow and surrounds the electrical motor 35 with its stator 36 and its rotor 37. The body part 32 is also shown in the figure. Said part is fixed with relation to the vehicle chassis 1. The illustrative embodiment shows three wings. However, it is possible to a different number of wings.

The cylindrical vane together with the protrusions seals the chambers so that the fluid cannot flow between said chambers. There is a short distance between the wings and the inner wall of the chambers so that some fluid may flow when the wing moves in relation to the protrusions. A damping force is provided due to the fluid restriction of the wings movement or protrusions movements.

Moving back to figure 5, the cylindrical vane 41, the wing 43 and the protrusion 49 can be seen as part of the vane damper. The stator 36 and the rotor can also be seen. As shown, the vane damper enclosing with its protrusions 49, 50, 51 is fixed to the attachment section 15 while the cylindrical vane 41 with its wings 42, 43, 44 is fixed to the body part 32 and therefore fixed in relation to the vehicle chassis 1. This means that when said section rotates due to the wheel 5 movements, the protrusions move in relation to the wings and the fluid will dampen said movement. A temperature compensating valve 52 is used to compensate for volume changes of the fluid relating to temperature fluctuations.

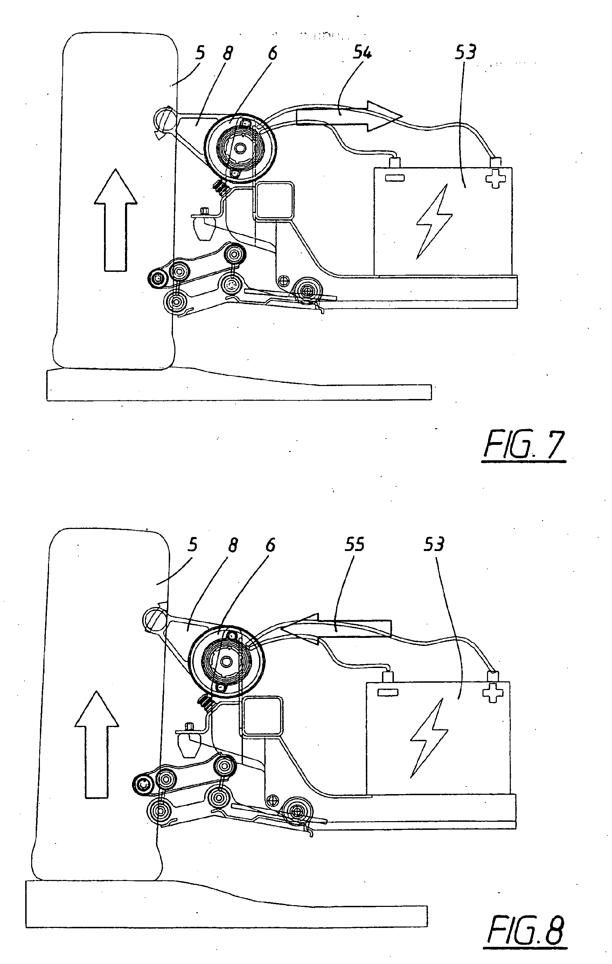

The functionality of the suspension arrangement will now be described in relation to figures 7-10 showing the four quadrants of the ride control. The torsion spring unit 6 comprises, as described earlier, a controllable torsion spring 13 and a controllable rotation damper 14, interconnected by an attachment section 15. The attachment section is connected to the lever arm 8 and via the upper linkage arm 2 to the wheel hub. Therefore, the wheel motions and the motion of the attachment section are connected. Consequently, if the attachment section is influenced by a force from the torsion spring or the rotation damper, it is transferred to the wheel. This enables a control of the suspension of a vehicle wheel.

As described earlier, both the torsion spring 13 and the rotation damper 14 comprises an electrical motor 29, 35. The introduction of a motor 35 into the rotation damper provides an active four quadrant active damping function. The torsion spring unit 6 can thereby absorb excessive energy from damping the vertical movements of the chassis and the wheel 5, which energy is charged into a battery or super capacitor (not shown) connected to the motor for later use by the suspension system or any electrical device in the vehicle. The motor can further create an active force control to increase or decrease the wheels contact with the road at wheel frequency (up to 15-20 Hz) due to irregularities in the road. The motor can force the wheel downwards to regain ground contact when there is a cavity and force the wheel upwards to reduce excessive ground force when there is strong impact in the jounce direction.

Due to the gear ratio a low rotational speed at the attachment section will result in a high rotational speed at the damper motor. The friction device 31 provides an overload protection against a strong force (created by acceleration due to larger road cavities) that may damage the gear and the motor.

In addition to the damper motor, there is the torsion spring motor which can control movement at a lower frequency (up to 2-3 Hz) to meet the vehicle body motions. Such movements are static levelling, body heave and pitch which requires much higher forces. This means that the combination of a torsion spring and a damper motor adds the further advantage of a condensed and modularized suspension unit which both at lower and higher frequencies has the four quadrant active dampening function and an active spring control to control of the vertical movements of the chassis and the wheel at road slopes or cavities in the ground. As mentioned earlier, the torsion spring motor is not able to recharge electric energy because of the gear ratio.

In operation, with reference to figure 7, the wheel is pushed upwards by a road obstacle. This refers to the first quadrant of the four quadrants active damping function. The frequency of this movement is higher than the vehicle frequency. Therefore, the torsion spring motor 29 and the planetary gear 30 can be considered as a solid structure with no relative movements between the components. The motor is locked with the movements of the attachments section 15. The torsion spring therefore functions as an ordinary spring, compensating the upwards movement of the wheel. The rotation damper dampens the wheel upward movement. This means that the rotor 37 rotates and the motor 35 is energized, which means that it recharges 54 electric energy to the energy storage device 53. The dampening force depends on the properties and control of the motor.

With reference to figure 8, there is a strong impact on the wheel 5 in jounce direction. This refers to the second quadrant of the four quadrants active damping function. The spring is a solid structure as described earlier in the text. Therefore, there is a risk that the strong impact is transferred to the vehicle chassis. In order to reduce this impact transfer, the motor 35 is energized 55 by the energy storage device and pulls the wheel upwards to reduce excessive ground force. The wheel is pulled with such a force so that the impact is not transferred to the vehicle body. The force should not be too strong, since the wheel gripping power also has to be retained.

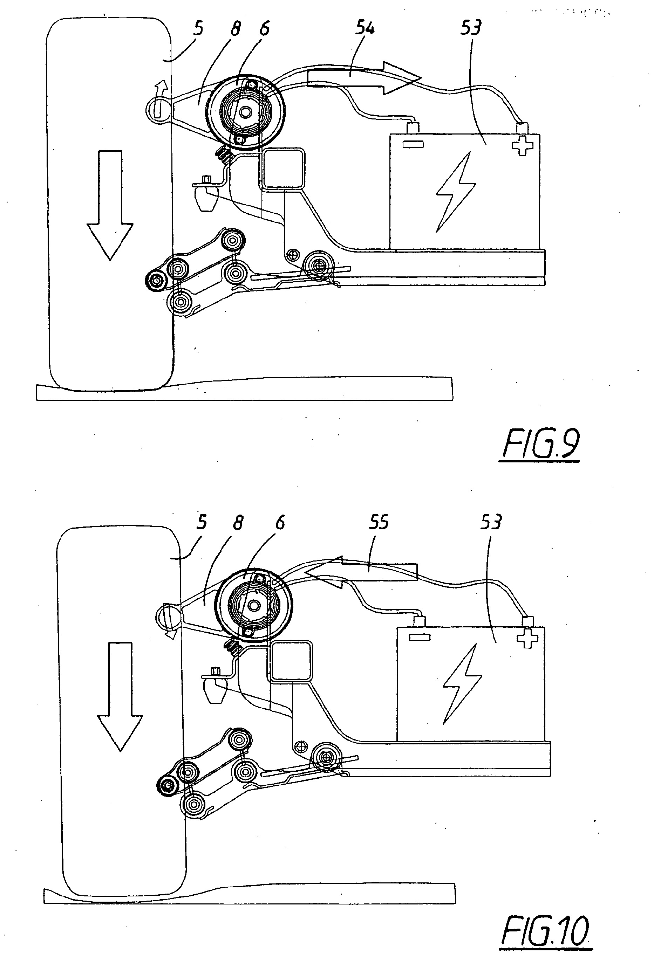

With reference to figure 9, the wheel 5 follows a road slope in a rebound. This refers to the third quadrant of the four quadrants active damping function. The spring is a solid structure as described earlier in the text. The downward movement is compensated by the spring while the rotation damper dampens the downward movement. This means that it recharges 54 electric energy to the energy storage device 53. The dampening force depends on the properties and control of the motor as mentioned earlier.

With reference to figure 10, the wheel 5 loses ground contact due to a cavity in the road. This refers to the fourth quadrant of the four quadrants active damping function. The spring is a solid structure as described earlier in the text. Therefore, there is a risk that the lost ground contact is transferred to the vehicle chassis. In order to reduce this impact transfer, the motor 35 is energized 55 by the energy storage device and pushed the wheel downwards to regain ground contact.

The invention is not limited to the embodiment described above, but can be varied within the scope of the appended claims. For example, the invention can be used in different kind of vehicles, such as cars, trucks or buses. Moreover, the active rotation damper and spring can be used in different wheel suspension arrangements, and therefore the invention is not limited to a use in the suspension arrangement illustrated in fig. 1 and fig. 7 - 10 respectively.

## Claims

1. Method for controlling a suspension of a vehicle wheel (5) by means of a suspension arrangement comprising at least two linkages (2, 8, 10) connecting the wheel (5) to the vehicle chassis (1) and a torsion spring unit (6) being part of one of said linkages (2, 8, 10), wherein said unit (6) comprises a torsion spring (13) and a rotation damper (15) interconnected by an attachment section (15), the damper (14) and the spring (13) are connected to the chassis (1) and the attachment section (15) is connected to the linkage (8, 10), **characterized in that** the rotation damper (14) comprises an electrical motor (35), wherein the motor (35) dampens oscillations in the suspension arrangement.

2. Method for suspension of a vehicle wheel according to claim 1, **characterized in that** the motor (35) dampens oscillations near the wheel resonance frequency which is a frequency up to 15-20 Hz.

3. Method for suspension of a vehicle wheel according to any of the preceding claims, **characterized in that** the torsion spring (13) dampens oscillations near the vehicle body resonance which is a frequency up to 3 Hz.

4. Method for suspension of a vehicle wheel according to any of the preceding claims, **characterized in that** the electrical motor (35) when the wheel is forced to move in jounce direction recharges an energy storage device (53) connected to the motor (35).

5. Method for suspension of a vehicle wheel according to any of the preceding claims, **characterized in that** the electrical motor (35) when there is a strong impact on the wheel (5) in jounce direction is energized by an energy storage device (53) and forces the wheel (5) upwards to reduce excessive ground force.

6. Method for suspension of a vehicle wheel according to any of the preceding claims, **characterized in that** the electrical motor (35) when the wheel (5) follows a road slope recharges an energy storage device (53) connected to the motor (35).

7. Method for suspension of a vehicle wheel according to any of the preceding claims, **characterized in that** the electrical motor (35) when a ground cavity makes the wheel (5) loose ground contact is energized by an energy storage device (53) and forces the wheel (5) downwards to regain ground contact.

8. Arrangement for suspension of a vehicle wheel, the arrangement comprising at least two linkages (2, 8, 10) connecting the wheel (5) to the vehicle chassis (1), a torsion spring unit (6) being part of one of said linkages (2, 8, 10), said unit (6) comprising a torsion spring (13) and a rotation damper (14) interconnected by an attachment section (15), wherein the damper (14) and the spring (13) are connected to the chassis (1) and the attachment section (15) is connected to the linkage (8,10), **characterized in that** the rotation damper (14) comprises an electrical motor (35) for dampening oscillations in the suspension arrangement.

9. Arrangement according to claim 8, **characterized in that** the attachment section (15) comprises a gearing unit (21-26) interconnecting the electrical motor (35) with the attachment section (15).

10. Arrangement according to claim 9, **characterized in that** the gearing unit (21-26) is interconnected to the attachment section (15) via a friction device (31) to provide moment overload protection.

11. Arrangement according to any of the claims 9 - 10, **characterized in that** the gearing unit (21-26) is a planetary gear.

12. Arrangement according to any of the claims 8 - 11, **characterized in that** the electrical motor (35) is rotatably arranged at the attachment section (15) and fixed to the vehicle chassis (1).

13. Arrangement according to any of the claims 8 - 12, **characterized in that** the rotor (37) of the electric motor (35) is interconnected with the attachment section (15).

14. Arrangement according to any of the claims 8 - 13, **characterized in that** the electrical motor (35) is connected to an electrical energy storage device (53), such as a battery or a capacitor, for instantaneous recharging of the storage device (53) or activation of the motor (35).

15. Arrangement according to any of the claims 8 - 14, **characterized in that** the torsion spring (13) is provided with an electrical motor (29) which is connected to an electrical energy storage device (53), such as a battery of a capacitor, for instantaneous adjustment of the spring preload.

16. Arrangement according to any of the claims 8 - 15, **characterized in that** a vane rotation damper (41 - 51) is arranged in parallel with the electrical motor (35) for providing additional damping force.

## Patentansprüche

1. Verfahren zur Regulierung einer Aufhängung eines Fahrzeugrads (5) mittels einer Aufhängungsanordnung mit zumindest zwei Verbindungen (2, 8, 10), die ein Rad (5) mit dem Fahrzeugchassis (1) verbinden, und einer Torsionsfedereinheit (6), die Teil von einer der Verbindungen (2, 8, 10) ist, wobei die Einheit (6) eine Torsionsfeder (13) und einen Rotationsdämpfer (15) umfasst, die durch einen Befestigungsabschnitt (15) miteinander verbunden sind, wobei der Dämpfer (14) und die Feder (13) mit dem Chassis (1) verbunden sind und der Befestigungsabschnitt (15) mit der Verbindung (8, 10) verbunden ist, **dadurch gekennzeichnet, dass** der Rotationsdämpfer (14) einen Elektromotor (35) umfasst, wobei der Motor (35) Oszillationen in der Aufhängungsanordnung dämpft.

2. Verfahren zur Aufhängung eines Fahrzeugrads nach Anspruch 1, **dadurch gekennzeichnet, dass** der Motor (35) Oszillationen nahe der Rad-Resonanzfrequenz dämpft, die eine Frequenz bis zu 15-20 Hz ist.

3. Verfahren zur Aufhängung eines Fahrzeugrads nach einem der vorhergehenden Ansprüche, **dadurch gekennzeichnet, dass** die Torsionsfeder (13) Oszillationen nahe der Fahrzeugkörper-Resonanz dämpft, die eine Frequenz bis zu 3 Hz ist.

4. Verfahren zur Aufhängung eines Fahrzeugrads nach einem der vorhergehenden Ansprüche, **dadurch gekennzeichnet, dass** der Elektromotor (35), wenn das Rad gedrängt wird, sich in Federwegrichtung zu bewegen, eine Energiespeichereinrichtung (53) auflädt, die mit dem Motor (35) verbunden ist.

5. Verfahren zur Aufhängung eines Fahrzeugrads nach einem der vorhergehenden Ansprüche, **dadurch gekennzeichnet, dass** der Elektromotor (35), wenn es einen starken Stoß auf das Rad (5) in Federwegrichtung gibt, durch eine Energiespeichereinrichtung (53) gespeist wird und das Rad (5) nach oben drängt, um eine übermäßige Bodenkraft zu verringern.

6. Verfahren zur Aufhängung eines Fahrzeugrads nach einem der vorhergehenden Ansprüche, **dadurch gekennzeichnet, dass** der Elektromotor (35), wenn das Rad (5) einer Straßenneigung folgt, eine mit dem Motor (35) verbundene Energiespeichereinrichtung (53) auflädt.

7. Verfahren zur Aufhängung eines Fahrzeugrads nach einem der vorhergehenden Ansprüche, **dadurch gekennzeichnet, dass** der Elektromotor (35), wenn eine Bodenvertiefung das Rad (5) dazu bringt, Bodenkontakt zu verlieren, durch eine Energiespeichereinrichtung (53) gespeist wird und das Rad (5) nach unten drängt, um Bodenkontakt wiederzuerlangen.

8. Anordnung zur Aufhängung eines Fahrzeugrads, wobei die Anordnung zumindest zwei Verbindungen (2, 8, 10) umfasst, die das Rad (5) mit dem Fahrzeugchassis (1) verbinden, eine Torsionsfedereinheit (6), die Teil von einer der Verbindungen (2, 8, 10) ist, wobei die Einheit (6) eine Torsionsfeder (13) und einen Rotationsdämpfer (14) umfasst, die durch einen Befestigungsabschnitt (15) miteinander verbunden sind, wobei der Dämpfer (14) und die Feder (13) mit dem Chassis (1) verbunden sind und der Befestigungsabschnitt (15) mit der Verbindung (8, 10) verbunden ist, **dadurch gekennzeichnet, dass** der Rotationsdämpfer (14) einen Elektromotor (35) zum Dämpfen von Oszillationen in der Aufhängungsanordnung umfasst.

9. Anordnung nach Anspruch 8, **dadurch gekennzeichnet, dass** der Befestigungsabschnitt (15) eine Getriebeeinheit (21-26) umfasst, die den Elektromotor (35) mit dem Befestigungsabschnitt (15) verbindet.

10. Anordnung nach Anspruch 9, **dadurch gekennzeichnet, dass** die Getriebeeinheit (21-26) mit dem Befestigungsabschnitt (15) über eine Reibungsvorrichtung (31) verbunden ist, um einen Momenten-Überlastschutz vorzusehen.

11. Anordnung nach einem der Ansprüche 9 bis 10, **dadurch gekennzeichnet, dass** die Getriebeeinheit (21-26) ein Planetengetriebe ist.

12. Anordnung nach einem der Ansprüche 8 bis 11, **dadurch gekennzeichnet, dass** der Elektromotor (35) an dem Befestigungsabschnitt (15) drehbar angeordnet ist und an dem Fahrzeugchassis (1) befestigt ist.

13. Anordnung nach einem der Ansprüche 8 bis 12, **dadurch gekennzeichnet, dass** der Rotor (37) des Elektromotors (35) mit dem Befestigungsabschnitt (15) verbunden ist.

14. Anordnung nach einem der Ansprüche 8 bis 13, **dadurch gekennzeichnet, dass** der Elektromotor (35) mit einer Speichervorrichtung (53) für elektrische Energie, wie beispielsweise eine Batterie oder ein Kondensator, verbunden ist, für sofortiges Aufladen der Speichervorrichtung (35) oder Aktivierung des Motors (35).

15. Anordnung nach einem der Ansprüche 8 bis 14, **dadurch gekennzeichnet, dass** die Torsionsfeder (13) mit einem Elektromotor (29) versehen ist, der mit einer Speichervorrichtung (53) für elektrische Energie, wie beispielsweise eine Batterie oder ein Kondensator, verbunden ist, für sofortige Regulierung der Federvorlast.

16. Anordnung nach einem der Ansprüche 8 bis 15, **dadurch gekennzeichnet, dass** ein Flügelrotationsdämpfer (41 - 51) parallel zu dem Elektromotor (35) angeordnet ist, zum Vorsehen einer zusätzlichen Dämpfungskraft.

## Revendications

1. Procédé de contrôle d'une suspension d'une roue (5) de véhicule au moyen d'un dispositif de suspension comprenant au moins deux liaisons (2, 8, 10) raccordant la roue (5) au châssis (1) de véhicule et une unité (6) à ressort de torsion faisant partie de l'une desdites liaisons (2, 8, 10), ladite unité (6) comprenant un ressort (13) de torsion et un amortisseur (15) de rotation interconnectés par une section (15) d'attache, l'amortisseur (14) et le ressort (13) étant raccordés au châssis (1), et la section (15) d'attache étant raccordée à la liaison (8, 10), **caractérisé en ce que** l'amortisseur (14) de rotation comprend un moteur électrique (35), le moteur (35) amortissant les oscillations dans le dispositif de suspension.

2. Procédé de suspension d'une roue de véhicule selon la revendication 1, **caractérisé en ce que** le moteur (35) amortit les oscillations à proximité de la fréquence de résonance de la roue, dont la valeur peut valoir de 15 à 20 Hz.

3. Procédé de suspension d'une roue de véhicule conforme à l'une quelconque des revendications précédentes, **caractérisé en ce que** le ressort (13) de torsion amortit les oscillations à proximité de la fréquence de résonance de la carrosserie de véhicule, qui peut atteindre 3 Hz.

4. Procédé de suspension d'une roue de véhicule conforme à l'une quelconque des revendications précédentes, **caractérisé en ce que** le moteur électrique (35) recharge un dispositif (53) de stockage d'énergie relié au moteur (35) quand la roue est déplacée en force à cause d'une secousse.

5. Procédé de suspension d'une roue de véhicule selon l'une quelconque des revendications précédentes, **caractérisé en ce que** le moteur électrique (35) reçoit de l'énergie d'un dispositif (53) de stockage d'énergie et pousse la roue (5) vers le haut, afin d'atténuer les forces exercées par le sol, en cas d'impact important sur la roue (5) lié à une secousse.

6. Procédé de suspension d'une roue de véhicule selon l'une quelconque des revendications précédentes, **caractérisé en ce que** le moteur électrique (35) recharge un dispositif (53) de stockage d'énergie relié au moteur (35) quand la roue (5) suit une chaussée inclinée.

7. Procédé de suspension d'une roue de véhicule selon l'une quelconque des revendications précédentes, **caractérisé en ce que** le moteur électrique (35) reçoit de l'énergie d'un dispositif (53) de stockage d'énergie et pousse la roue (5) vers le bas pour améliorer le contact avec le sol quand une cavité du sol entraîne la perte de contact entre la roue (5) et le sol.

8. Dispositif de suspension d'une roue de véhicule, ce dispositif comprenant au moins deux liaisons (2, 8, 10) reliant la roue (5) au châssis (1) du véhicule, une unité (6) formant un ressort de torsion faisant partie d'une desdites liaisons (2, 8, 10), ladite unité (6) comprenant un ressort (13) de torsion et un amortisseur (14) de rotation interconnecté par une section (15) d'attache, l'amortisseur (14) et le ressort (13) étant raccordés au châssis (1) et la section d'attache (15) étant raccordée à la liaison (8, 10), **caractérisé en ce que** l'amortisseur (14) de rotation comprend un moteur électrique (35) permettant d'amortir les oscillations dans le dispositif de suspension.

9. Dispositif selon la revendication 8, **caractérisé en ce que** la section d'attache (15) comprend une unité (21-26) à engrenages assurant l'interconnexion du moteur électrique (35) avec la section (15) d'attache.

10. Dispositif selon la revendication 9, **caractérisé en ce que** l'unité à engrenages (21-26) est interconnectée à la section (15) d'attache par le biais d'un dispositif (31) de friction, afin d'obtenir une protection contre la surcharge de moment.

11. Dispositif selon l'une quelconque des revendications 9 ou 10, **caractérisé en ce que** l'unité (21-26) à engrenages est une embrayage planétaire.

12. Dispositif selon l'une quelconque des revendications 8 à 11, **caractérisé en ce que** le moteur électrique (35) est engagé en rotation avec la section de d'attache (15) et fixé au châssis (1) du véhicule.

13. Dispositif selon l'une quelconque des revendications 8 à 12, **caractérisé en ce que** le rotor (37) du moteur électrique (35) est interconnecté à la section (15) d'attache.

14. Dispositif selon l'une quelconque des revendications 8 à 13, **caractérisé en ce que** le moteur électrique (35) est relié à un dispositif (53) de stockage d'énergie électrique, tel qu'une batterie ou un condensateur, pour une recharge instantanée du dispositif (53) de stockage ou pour l'activation du moteur (35).

15. Dispositif selon l'une quelconque des revendications 8 à 14, **caractérisé en ce que** le ressort (13) de torsion est doté d'un moteur électrique (29) qui est relié à un dispositif (53) de stockage d'énergie électrique, tel qu'une pile ou un condensateur, pour un ajustement instantané de la charge préalable du ressort.

16. Dispositif selon l'une quelconque des revendications 8 à 15, **caractérisé en ce qu'**un amortisseur (41-51) de rotation d'aube est branché en parallèle au moteur électrique (35) afin de produire une force supplémentaire d'amortissement.
